**Europäisches Patentamt**

**European Patent Office**

**Office européen des brevets**

(19)

(11) Veröffentlichungsnummer: **0 230 227 B1**

# (12) EUROPÄISCHE PATENTSCHRIFT

(45) Veröffentlichungstag der Patentschrift:
**13.02.91 Patentblatt 91/07**

(21) Anmeldenummer: **87100131.9**

(22) Anmeldetag: **08.01.87**

(51) Int. Cl.⁵: **F24J 2/16, F24J 2/52,**
**F24J 2/36, F24J 2/02,**
**F24J 2/34**

(54) **Solaranlage.**

Die Akte enthält technische Angaben, die nach dem Eingang der Anmeldung eingereicht wurden und die nicht in dieser Patentschrift enthalten sind.

(30) Priorität: **15.01.86 DE 3600881**
**07.02.86 DE 8603227 U**
**05.04.86 DE 8609268 U**
**17.05.86 DE 8613478 U**

(43) Veröffentlichungstag der Anmeldung:
**29.07.87 Patentblatt 87/31**

(45) Bekanntmachung des Hinweises auf die Patenterteilung:
**13.02.91 Patentblatt 91/07**

(84) Benannte Vertragsstaaten:
**AT BE CH DE ES FR GB GR IT LI NL SE**

(56) Entgegenhaltungen:
EP-A- 0 076 455
CH-A- 600 262
CH-A- 624 208
DE-A- 2 443 029
DE-A- 2 523 479
DE-A- 2 557 843
FR-A- 2 511 130
US-A- 3 025 851
US-A- 3 841 302
US-A- 4 316 448
US-A- 4 329 978
US-A- 4 329 978
US-A- 4 513 734
**SOLAR ENERGY, Band 19, Nr. 6, November 1977, Seiten 663-668, Pergamon Press, Oxford, GB; S.L. GRASSIE et al.: "The use of planar reflectors for increasing the energy yield of flat-plate collectors"**
**PATENT ABSTRACTS OF JAPAN, Band 8, Nr. 64 (M-285)[1501], 27. März 1984; & JP-A-58 213 158 (MATSUSHITA DENKI SANGYO K.K.) 12 -12-1983**

(56) Entgegenhaltungen:
**PATENT ABSTRACTS OF JAPAN, Band 9, Nr. 22 (M-354)[1745], 30. Januar 1985; & JP-A-59 167 652 (SHARP K.K.) 21-09-1984**
**PATENT ABSTRACTS OF JAPAN, Band 9, Nr. 256 (M-421)[1979], 15. Oktober 1985; & JP-A-60 105 866 (MATSUSHITA DENKO K.K.) 11 -06-1985**

(73) Patentinhaber: **Wenzel, Joachim**
**Hauptmannsreute 46**
**D-7000 Stuttgart 1 (DE)**

(72) Erfinder: **Wenzel, Joachim**
**Hauptmannsreute 46**
**D-7000 Stuttgart 1 (DE)**

**Beschreibung**

Die Erfindung betrifft eine Solaranlage mit einem Kollektorfeld, das eine Mehrzahl von in nebeneinander oder übereinander liegenden Reihen von Absorbern und/oder Solarzellen mit dazwischen liegendem Abstandsraum aufweist, an deren Rändern teilweise ein oder mehrere ebene Spiegelflächen in einem Winkel zu den Absorbern und/oder Solarzellen angeordnet sind, wobei die auf die Spiegelflächen auftreffende Sonnenstrahlung zumindest teilweise auf die Absorber und/oder Solarzellen fällt.

Es ist bereits eine derartige Solaranlage bekannt, bei der die Spiegel durch rollbare Spiegelfolien gebildet sind, welche schwenkbar sind, so daß eine gewisse einachsige Sonnennachführung der rollbaren Spiegelfolien vorhanden ist. Die Nachführung der Spiegelfolien bedingt jedoch einen erheblichen Aufwand und einen starken Verschleiß, so daß die Spiegelfolie öfter ausgewechselt werden muß. Die Spiegelflächen sind hierbei nur an der Nordkante der Absorberfläche angeordnet (US-PS 4.316.448).

Im Jahre 1977 hat man in Australien bereits Versuche mit starren, nicht nachführbaren Spiegel ausgeführt. Dabei wurde bereits vorgeschlagen, daß die Spiegel seitlich ein wenig überhängen sollen, weil ein gewisser Überhang vorteilhaft erschien, woraufhin ein Wert gleich der halben Reflektorhöhe ausgewählt wurde, um dies durchzuführen.

Die maximale Erhöhung wurde jedoch nur mit 24% gemessen. Die tägliche prozentuale Verbesserung betrug im Durchschnitt demgemäß sogar nur 14%. Außerdem hat man auch mit einem diffusen Reflektor gearbeitet und kam zu dem Ergebnis, daß der diffuse Reflektor nur eine unbedeutende, zu vernachlässigende Erhöhung der Strahlung bringt. Danach hat der in der Praxis arbeitende Fachmann davon Abstand genommen, Derartiges auszuführen, weil das von vornherein nicht lohnend erschien (Solar Energy, Band 19, Nr. 6, Nov. 1977).

Es ist weiter ein Salzwärmespeicher mit starren Spiegeln bekannt, der im Osten und im Westen je eine Endwandung aufweist, welche aus Spiegelfolien bestehen kann. Diese ist jedoch sehr aufwendig und muß durch zahlreiche verstärkungen in ihrer Lage gehalten werden, die Schatten auf die zu erwärmende Wasserflache Werfen (US-PS 4.326.498).

Ein anderer Solarkollektor ist der Sonne zweiachsig nachführbar, wodurch der Nachteil ausgeglichen wird, daß der Öffnungswinkel zwischen den Spiegelflächen verhältnismäßig sehr klein ist. Der Aufwand für zweiachsig nachführbare Anlagen ist bekanntlich jedoch sehr hoch, auch sind derartige Anlage verschleiß- störanfällig und windempfindlich (DE-OS 25 23 479). Das Gleiche gilt auch von einer Anlage, die auf dem Dach eines Gebäudes angeordnet ist und einen schwenkbaren Spiegel an der Südkante aufweist. Im übrigen ist hier eine zweiachsige Sonnennachführung nicht vorgesehen, so daß infolge des verhältnismäßig kleinen Öffnungswinkels diese Anlage praktisch nur um die Mittagszeit herum wirksam arbeitet (US-PS 3, 841, 302).

Schließlich gibt es auch noch Solaranlagen, bei denen die Spiegel auf der sonnenabgewandten Seite in einem Abstand von dem Absorber angeordnet sind, so daß dieser die Reflektionsstrahlung zum größten Teil von Norden aus erhält. Hierfür ist der Bodenflächenbedarf stark vergrößert, weil der Abstand zwischen dem Absorber und der Spiegelfläche etwa ein Drittel der Abstandsbreite betragen soll. Um die Mittagszeit verursacht hierbei der Absorber starken Schatten auf die Spiegelfläche nördlich des Absorbers, so daß diese soweit nicht nutzbar ist.

In diesem Falle ist hier eine Abwinkelung der nach Osten und Westen sich erstreckenden Spiegel vorgesehen, durch die die Sonne morgens und abends verstärkt auf den Kollektor geworfen werden soll. Falls die Abwinkelung weggelassen wird, verringert sich die gesamte Menge der sammelbaren Sonnenenergie (DE-OS 25 57 843). Eine weitere Solaranlage dieser Art zeigt keine Abwinkelung der Spiegel, doch eine starke geradlinige verlängerung derselben nach Osten und Westen. Dadurch ist die Spiegelfläche in dem Ausführungsbeispiel 12 x so groß wie die Absorberfläche. Es wird jedoch nur wenig mehr als die doppelte Energiemenge nur zwischen 9.00 Uhr morgens und 3.00 Uhr nachmittags im Hochsommer gewonnen (US-PS 4, 513, 734).

Zur Lösung des Bodenflächenbedarfproblems bei Solaranlagen ist ferner bekannt, die Absorber oder Module auf Stützen oder Masten zu setzen, so daß der Boden darunter für die verschiedensten Zwecke genutzt werden kann. Zum Beispiel wurde vorgeschlagen, die verkehrswege zu überbauen. Dieser Vorschlag wurde auch bereits ausgeführt (EP-A-0076 455, VDI-Nachrichten Nr. 52, 1985, S. 25). Diese Anlage dient zur Erzeugung industrieller Prozeßwärme mittels vacuum- Röhrenkollektoren, die alle in einer horizontalen Lage dicht nebeneinander und hintereinander angeordnet sind.

Der Erfindung liegt die Aufgabe zugrunde, die Solaranlage mit Spiegel- sowie Absorberflächen und/oder Solarzellen auszurüsten, bei der nicht nur die direkt auftreffende Sonnenstrahlung genützt wird, sondern auch die morgens früh und abends spät einfallenden Sonnenstrahlen, ohne daß irgendeine Sonnennachführung der Spiegel oder der Absorberflächen vorgesehen ist. Dabei soll der Boden- oder Flächenbedarf möglichst gering sein.

Zur Lösung dieser Aufgabe ist vorgesehen, daß die Spiegelflächen und die Absorber und/oder Solarzellen starr auf dem Dach eines Gebäudes oder auf Tragelementen angeordnet sind, daß die Spiegelflächen bei der Benutzung in einer zur Absorber- und/oder Solarzellenebene geneigt verlaufenden Ebene befestigt sind, wobei mindestens eine etwahorizontal liegende Spiegelfläche vorhanden ist, daß die Spiegelflächen sich hinsichtlich der Absorber und/ oder Solarzellen bei der Benutzung seitlich über die Absorberflächen und/oder Solarzellenflächen hinaus ausdehnen, daß die Spiegelflächen durch Folien oder spiegelnde Metallflächen gebildet sind, die an den starren Tragelementen zur Halterung der Spiegel befestigt sind und daß die Spiegel in dem Abstandsraum zwischen den Reihen der Kollektoren oder Solarmodule angeordnet sind.

Dadurch wird besonders morgens und abends zusätzliche Sonnenstrahlung genutzt, ohne daß die Wirkung der Spiegel mittags behindert ist. Ferner ist der Bodenflächenbedarf oder sonstige Flächenbedarf infolge der Anordnung der Spiegel gar nicht oder nur unwesentlich vergrößert. Ferner entsteht hierdurch die überraschende Wirkung, daß die diffuse Strahlung besonders durch die horizontal liegende Spiegelfläche, aber auch durch die seitlichen Ausdehnungen der preisgünstigen Spiegelflächen in erheblichem Umfang, nämlich um 20-80%verstärkt wird, wie durch Versuche nachgewiesen wurde. Die direkte Sonnenstrahlung kann dagegen um mehr als 100% durch die Spiegelanordnung verstärkt werden.

Vorteilhafte Ausgestaltungen sind in den Unteransprüchen angegeben.

Weitere Vorteile und Einzelheiten der Erfindung ergeben sich aus der nun folgenden Beschreibung einiger Ausführungsbeispiele unter Hinweis auf die Zeichnung. In dieser zeigen :

Fig. 1 eine schematische Seitenansicht auf eine nicht zur Erfindung gehörende Großanlage zur industriellen Nutzung ;

Fig. 2 eine Draufsicht auf die Anlage nach der Fig. 1 in verkleinerndem Maßstab ;

Fig. 3 eine schematische Seitenansicht auf eine erste Ausführungsform ;

Fig. 4 eine schematische Seitenansicht auf eine darüber hinausgehende Ausführungsform ;

Fig. 5 eine Seitenansicht auf eine weitere Ausführungsform ;

Fig. 6 eine Draufsicht auf die Ausführungsform nach der Fig. 5 ;

Fig. 7 eine Seitenansicht auf eine weitere Ausführungsform ;

Fig. 8 eine Seitenansicht auf eine weitere Ausführungsform ;

Fig. 9 eine Draufsicht auf die Ausführungsform nach der Fig.8 ;

Fig.10 eine Seitenansicht auf eine darüber hinausgehende Ausführungsform und

Fig.11 eine Seitenansicht auf eine Letzte Ausführungsform.

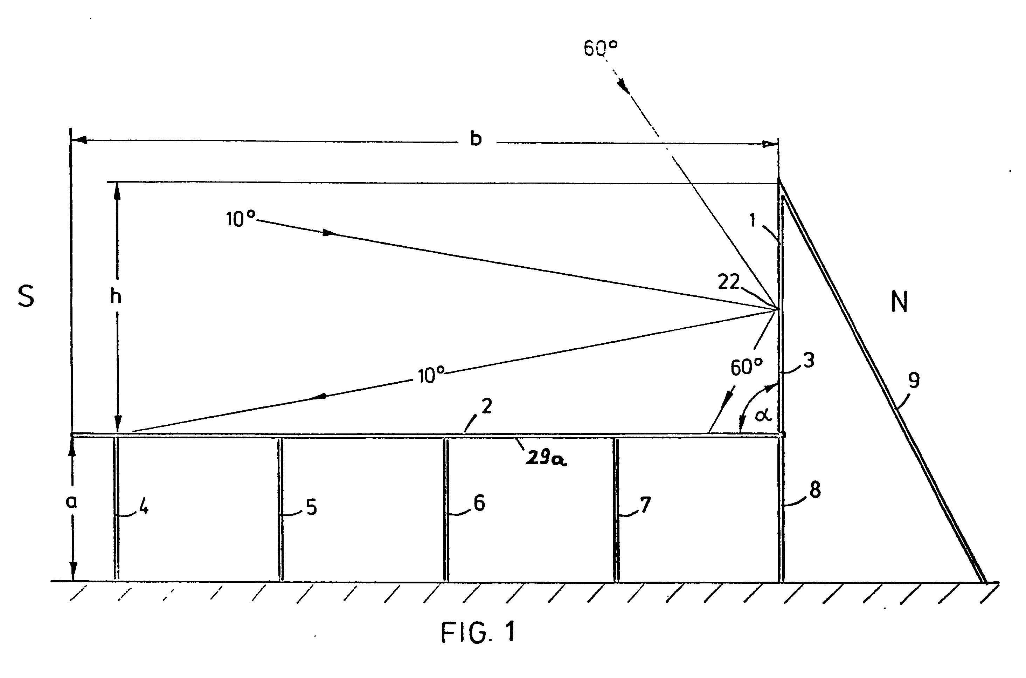

Fig. 1 zeigt eine industrielle Solaranlage, die der Temperaturerhöhung des Rücklaufwassers in der Bücklaufleitung eines Fernheiznetzes dieser Stadt dient. Hierbei sind 1.000 qm Vacuum-Kollektoren 2 auf den Stützen 4, 5, 6, 7 und 8 im Abstand über dem Boden in einer einzigen horizontalen Ebene neben und hintereinander über doppelgleisigen Eisenbahnschienen angeordnet.

Dies wurde bereis ausgeführt und muß daher dem Fachmann nicht näher erläutert werden.

Der Erfindungsgegenstand zeigt nun zum Beispiel eine Bretterwand 3 über der nördlichen Stütze 8, die durch Stützen 9, 10, 11 in ihrer Lage gehalten und gegen Sturm gesichert ist. Die Südseite der Bretterwand 3 ist mit einer Spiegelfläche 1 versehen, wobei es sich um eine Spiegel folie oder ein spiegelndes Metallblech wie ein nichtrostendes Chromnickel blech handeln kann.

Der Winkel $\alpha$ zwischen dem Kolloktorfeld 2 und der Spiegelfläche 1 ist hier gleich 90 ° gewählt. Die maximale Einstrahlung mittags beträgt bekanntlich in unseren Breitengraden eta 60 ° mittags am 21. Juni. Es ist nur der Mittenstrahl eingezeichnet, dem Fachmann ist verständlich, daß die Strahlung über die gesamte Spiegelfläche 1 eintrifft. Man weiß nun, daß der Einfallswinkel gegenüber der ebenen Fläche gleich dem Ausfallswinkel ist. Danach wird der höchste 60° Mittenstrahl ebenso auf das Kollektorfeld 2, wenn auch nur auf den rechten Teil hiervon geworfen wie der 10°-Strahl, der ebenfalls eingezeichnet ist.

Dies ist völlig unabhängig von der übrigen dem Fachmann bekannten Wirkungsweise, so daß es sich hier um eine absolut zusätzliche Strahlenwirkung handelt, so daß eine entsprechende zusätzliche Leistung des Kollektorfeldes erzeugt wird.

Dem Fachmann ist verständlich, daß das Verhältnis der Breite b zu der Höhe h maßgebend dafür ist, ob noch die gesamte Strahlung im Winter und ims Sommer das Kollektorfeld 2 voll erreicht.

Dem Fachmann ist ferner ohne weiteres verständlich, daß alle übrigen Sonnenstrahlungen zwischen 10° und 60 ° liegen, und daß diese dann auch auf das Kollektorfeld 2 auftreffen, wenn dies schon bei den erwähnten Extremstrahlungen der Fall ist.

Ferner erkennt der Fachmann, daß besonders günstig die Nutzung der niedrigen Sonnenstrahlung im Winter und in den Übergangszeiten ist.

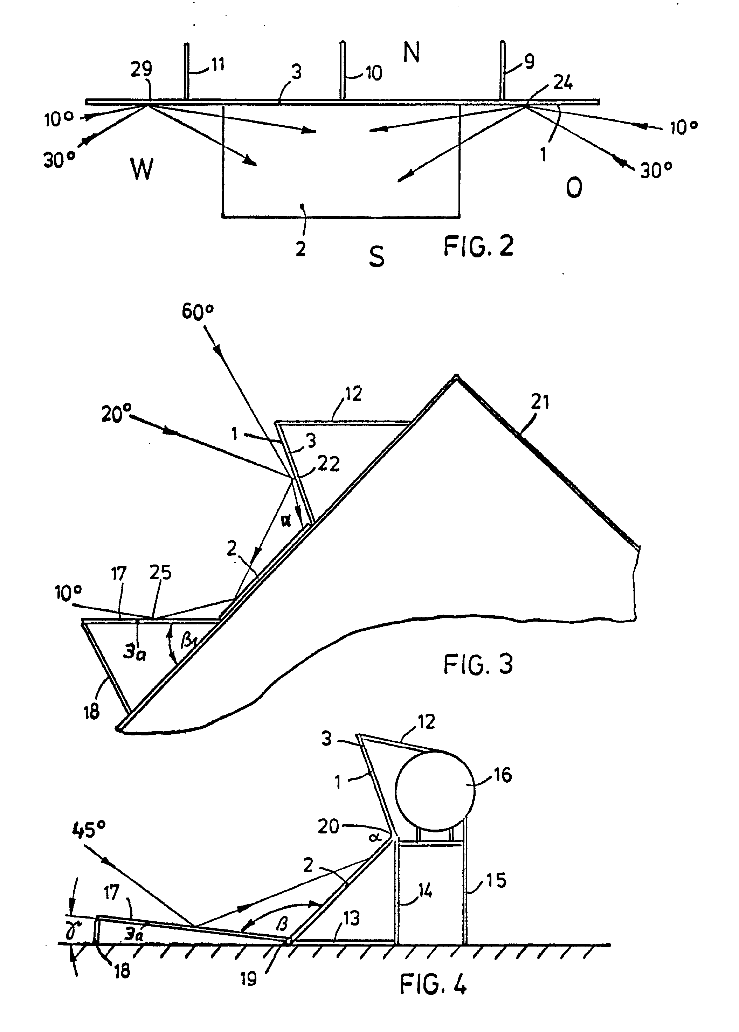

Die Fig. 2 zeigt die Draufsicht in stark verkleinerndem Maßstab auf die Ausführungsform nach der Fig. 1 . Man erkennt, daß die Nordwand mit dem Tragelement 3 und der Spiegelfläche 1 am Kollektorfeld 2 nach Westen links und Osten rechts über die Randkanten des Kollektorfeldes 2 hinaus verlängert ist. Dadurch besteht die Möglichkeit, die frühmorgens und spätabends auftreffende Strahlung von zum Beispiel 10° oder 30°, wie eingezeichnet, ebenfalls auf das Kollektorfeld 2 abzulenken.

Diese zusätzlichen Verlängerungen nach Osten und Westen bedeuten zwar einen zusätzlichen Aufwand. Dieser lohnt sich jedoch infolge des verhältnismäßig geringen Aufwandes für die Spiegelanordnung.

Mit 29 links und 24 rechts sind die Auftreffpunkte der Mittenstrahlung auf die erwähnten Verlängerungen bezeichnet. In Fig. 1 ist der Auftreffpunkt mit 22 bezeichne .

Das Kollektorfeld 2 nach der Fig. 1 ist darüber hinaus mit einer Spiegelfläche 29 a unterlegt. Dadurch wird die zwischen den Kollektorstreifen in den Röhren hindurchgehende Sonnenstrahlung von der Spiegelfläche 29a reflektiert und trifft dann auf die Kollektorstreifen.

Die in den Fig. 1 und 2 dargestellte Ausführungsform zeigt keinerlei zusätzlichen Bodenflächenbedarf. Lediglich für die Stützen 9, 10 und 11 und mögliche weitere Stützen ist ein geringer Flächenbedarf am Boden erforderlich, wie man der Fig. 1 entnehmen kann.

Fig. 3 zeigt die schematische Seitenansicht auf eine Kleinanlage. Auf dem Dach 21 ist schematisch ein Kollektor 2 dargestellt, der in bekannter Weise auch in das Dach 21 integriert sein kann. In der oberen Nordkante ist wieder in einem Winkel α zu dem Kollektor 2 die Spiegelfläche 1 mit dem Tragelement 3 angeordnet. Das Tragelement 3 ist durch die horizontal liegende Stütze 12 und weitere parallele Stützen gehalten.

An der unteren Südkante ist nun eine zusätzliche Spiegelfläche 17 mit dem Tragelement 3a etwa horizontal in einem Winkel β 1 zu dem Dach 21 angeordnet, die durch die Stütze 18 und mögliche weitere parallelen Stützen gehalten ist. Hierdurch körnen die sehr niedrigen Sonnestrahten von 10° undweniger, die im Punkt 25 auftreffen, auf den Kollektor 2 albgelenkt werden. Dagegen erreicht die hohe Sonnenstrahlung über dem Punkt 25 der Spiegelfläche 17 den Kollektor 2 hier nicht mehr, maximal wird etwa die 35 °-Sonnenstrahlung den Kollektor 2 über die Spiegelfläche 17 noch erreichen.

Somit ergänzen sich die beiden Spiegelflächen 1 und 17. Die Spiegelfläche 17 ist mehr für dieniedrige, die Spiegelfläche 1 für die hohe Sonnen einstrahlung geeignet. Beide überschneiden sich aber sehr stark, so daß im mittleren Bereich zwischen 20° und 35 ° Sonneneinstrahlung beide Spiegelflächen 1 und 17 voll wirksam sind und die Leistung des Kollektors 2 um mehr als 100% steigern können.

Fig. 4 zeigt die schematische Seitenansicht auf eine kleine Thermo-Syphon-Anlage, die auf dem Flachdach eines Gebäudes angeordnet ist. Der Kollektor 2 ist hier in einem Neigungswinkel von etwa 45° durch ein Gestell mit den Stützen 13, 14 angeordnet. Darüber seicht man den Speicherbehälter 16, der teilweise auf den gleichen und teilweise auf zusätzlichen Stützen 15 gehalten ist, wie dies der vorbekannte Stand der Technik zeigt. Dies muß daher nicht weiter erläutert werden.

Wie nach der Fig. 3 sind hier wieder zwei Spiegelflächen 1,17 in einem Winkel α an der nördlichen Oberkante und einem Winkel β an der südlichen Unterkante des Kollektors 2 angeordnet. Während der Winkel α etwa so groß gewählt ist wie in der Fig. 3 wurde der Winkel β jetzt kleiner gewählt, und zwar liegt durch die Stütze 18 am südlichen Ende der Spiegelfläche 17 diese etwa in einem Winkel von 15 ° zu dem horizontalen Flachdach. Auf diese Weise kann auch die 45°-Strahlung, wie dargestellt, auf den Kollektor 2, durch die Spiegelfläche 17 abgelenkt werden. Bezüglich der Spiegelfläche 1 sind die Verhältnisse die gleichen wie in der Fig. 3.

Nun kann würschenswert sein, die Winkel α und β von Hand saisonbe dingt zu ändern. Hierzu sind zwischen der Spiegelfläche mit dem Tragelement 3 a und den Kollektor 2 sowie zwischen diesem und der Spiegelfläche 1 mit dem Tragelement 3 Scharniere 19, 20 angeordnet. Dadurch kann man zum Beispiel im Hochsommer morgens früh den Winkel β größer und den Winkel α kleiner als dargestellt einstellen, indem die Stützen 12 verstellt und die Stütze 8 ganz entfernt wird. In der Mittagszeit ist im Sommer jedoch erwünscht, den Winkel β wesentlich kleiner und den Winkel α viel größer zu wählen, und swar noch über das hinaus,was in der Fig. 4 dargestellt ist. Das Gleiche gilt für verchiedene Einstellungen im Sommer und im Winter. Da im Winter die Sonnenstrahlung bekanntlich niedrig ist, ist Winkel β groß und winkel α klein zu wählen. Dies kann im Herbst und Frühjahr so bleiben, weil dann die hohen Sonnenstrahlen bis zu 60° ohnehin gar nicht auftreten.

Selbstverständlich wird der Fachmann für diese Sommer-Wintereinstellung Arretierungen für die Tragelemente 3 und 3a durch die Stützen 12 und 18 vorsehen, damit die Anlage auch der möglichen Beanspruchung durch einen starken Sturm standhält. Dies gilt natürlich besonders für das obere Tragelement 3 mit der Spigelfläche 1. DurchNordwinde ist dies allerdings weniger gefährdet, weil der Speicher teilweise Windschatten liefert. Auch die Ost- und Westwinde sind ungefährlich, da sie auf die Schmalflächen der Anlage auftreffen. Lediglich die Südwinde müssen durch die Stüzen aufgenommen werden.

Das Gleiche gilt natürlich auch für die Ausführungsform nach der Fig. 3. Die Stützen 12 sind auch dort in der Lage, die Windlast der Sünwinde aufzunehmen, zumal das Dach 21 einen Windstau verursacht.

Zur Verstellung der Stützen 12 und 18 kann ferner zweckmäßig sein, Scharniere auch zwischen diesen Stützen und den Tragelementen 3, 3a vorzusehen.

Die Erfindung zeigt den Vorteil, daß sie nachträglich an alle bekannten Solaranlagen angebracht werden kann. Auch bei der Erstellung von Neuanlagen ist bevorzugt, zunächst den herkömmlichen Teil der Anlage zu installieren, woraufhin die Tragelemente mit den Spiegelflächen angebracht werden. Diese können vorgefertigt sein, doch ist die Fertigung sehr einfach, so daß dies auch handwerklich erfolgen kann. Infolge der großen Nähe der Spielgel zu den Kollektoren muß es sich hier nicht um Präzisionsarbeit handeln.

Andererseits ist die Fertigung der Tragelemente mit den Spiegeln der/art einfach und kostengünstig, daß man alle sich nur bietenden Möglichkeiten wirtschaftlich nutzen kann.

Ebenso wie in der Fig. 2 bei der nördlichen Spiegelfläche 1 dargestellt, ist bei den südlichen Spiegelflächen 17 vorgesehen, daß diese über die östlichen und westlichen Dimensionen des Kollektorfeldes 2 hinausgehen, so daß auch die Strahlung morgens und abends aufgefangen und abgelenkt wird. Hierfür kann der Winkel α anders gewählt werden, weil diese Strahlen bekanntlich immer niedrig sind. Der Winkel β kann hierfür auch gleich 0 gewählt werden wie gemäß der Fig.

Zum Beispiel gibt es Großanlagen, die ganz anders gebaut sind als die nach den Fig. 1 und 2 dargestellte. Zum Beispiel hat man auf der deutschen Nordseeinsel Pellworm geschlossene lange Reihen von Solarmodulen auf Stützen gesetzt. Der Sonne abgewandt sind im Abstand hierzu eine große Anzahl von Reihen angeordnet. Die bekannte Anordnung ist nicht günstig, weil nicht zu verhindern ist, daß insbesondere im Winter und in den Übergangszeiten, aber auch morgens und abends die Solarmodule sich gegenseitig beschatten. Dies kann selbst durch sehr große Abstände zwischen den einzelnen Reihen nicht ganz verhindert werden.

Aber auch hier ist der Erfindungsgegenstand wie folgt nachträglich an wedbar :

Die vorderste der Sonne zugewandte Reihe erhält die Spiegelfläche 17 mit den Tragelementen 3a auf Stützen. Die hinterste Reihe des Kollektorfeldes erhält die Spiegelfläche 1 mit den Tragelementen 3 nach den Fig. 3+4. Hierzu können die vorhandenen Stützen 14 nach oben verlängert oder neue Stützen angeordnet werden. Bei den dazwischen liegenden Reihen ist eine Spiegelanordnung zwar ebenfalls möglich, doch würden die oberen Spiegel die dahinter liegenden Reihen beschatten, wodurch dies ausscheidet. Dagegen sind die unteren Spiegelflächen 17 machbar, werden aber zum Teil bei niedriger Sonneneinstrahlung von davor liegenden Reihen teilweise etwas beschattet.

Dagegen zeigt die bekannte Anordnung der Kollektoren senkrecht in einem größeren Abstand übereinander den Vorteil, daß die Kollektoren sich gegenseitig niemals beschatten können. Hier besteht auch die Möglichkeit, den Erfindungsgegenstand in weit größerem Umfang anzuwenden. Man kann nämlich in den Zwischenraum zwischen übereinander liegenden Kollektoren die oberen Spiegelflächen 1 mit den Tragelementen 3 in einem Winkel etwas größer als 60° zur Horizontalen gemäß den Fig. 3 und 4 ganz bequem an einem jeden Kollektor anbringen. Lediglich die untere Spiegelfläche 17 mit dem Tragelement 3a kann nur an der untersten Modulreihe angeordnet werden.

Ein zusätzlicher Bodenflächenbedarf ist in diesen Fällen überhaupt nicht vorhanden. Dennoch entsteht durch die Erfindung die überraschende Wirkung, daß mit nur sehr geringem Aufwand, weil das Gestell bereits vorhanden ist, eine wesentliche Leistungssteigerung erzeugt werden kann. Zur Anbringung der Tragelemente 3 können in diesem Fälle die ohnehin vorhandenen Streben für die Kollektoren oder Solarmodule dienen. Wenn keine direkte Sonneneinstrahlung vorhanden ist, also bei trübem Wetter, arbeiten die Kollektoren in der bekannten Weise weiter. Zusätzlich wird noch ein Teil der Streustrahlung, insbesondere durch die etwa horizontal liegenden Spiegelflächen 17, in der gewünschten Weise abgelenkt.

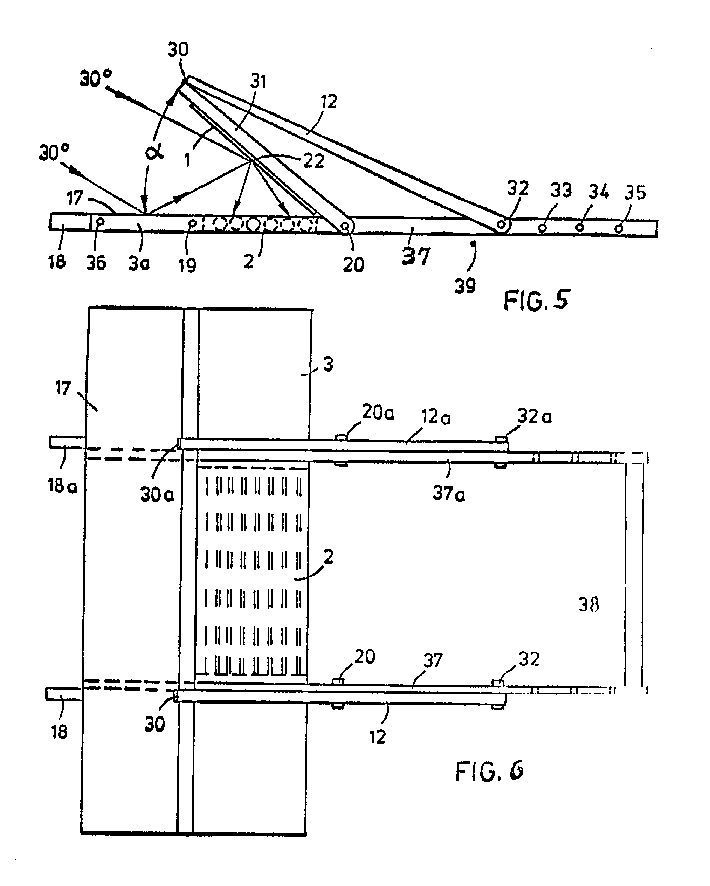

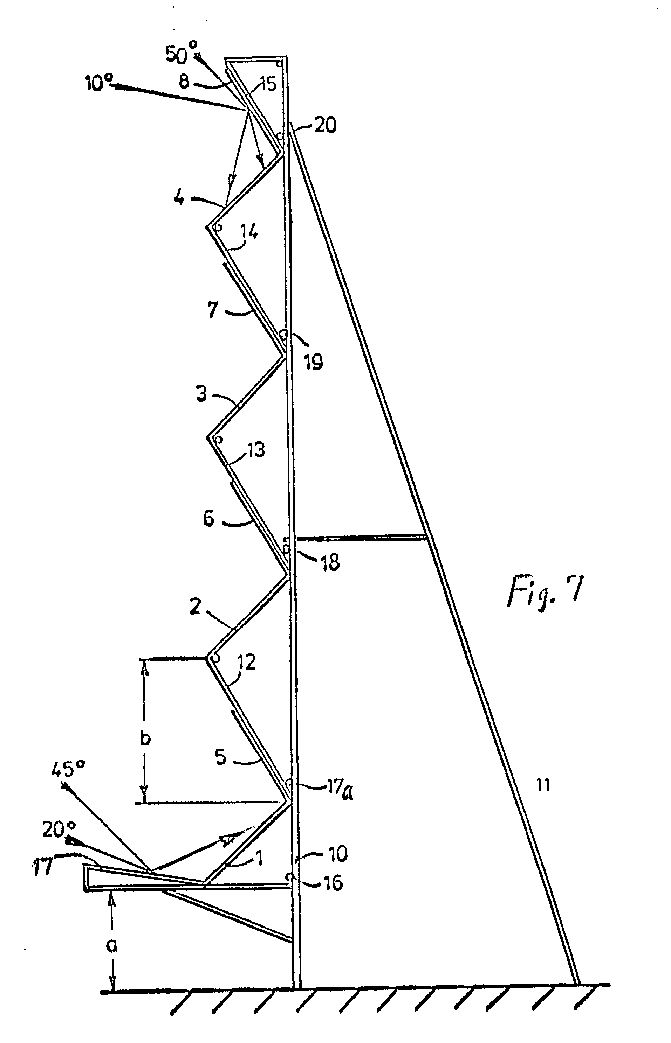

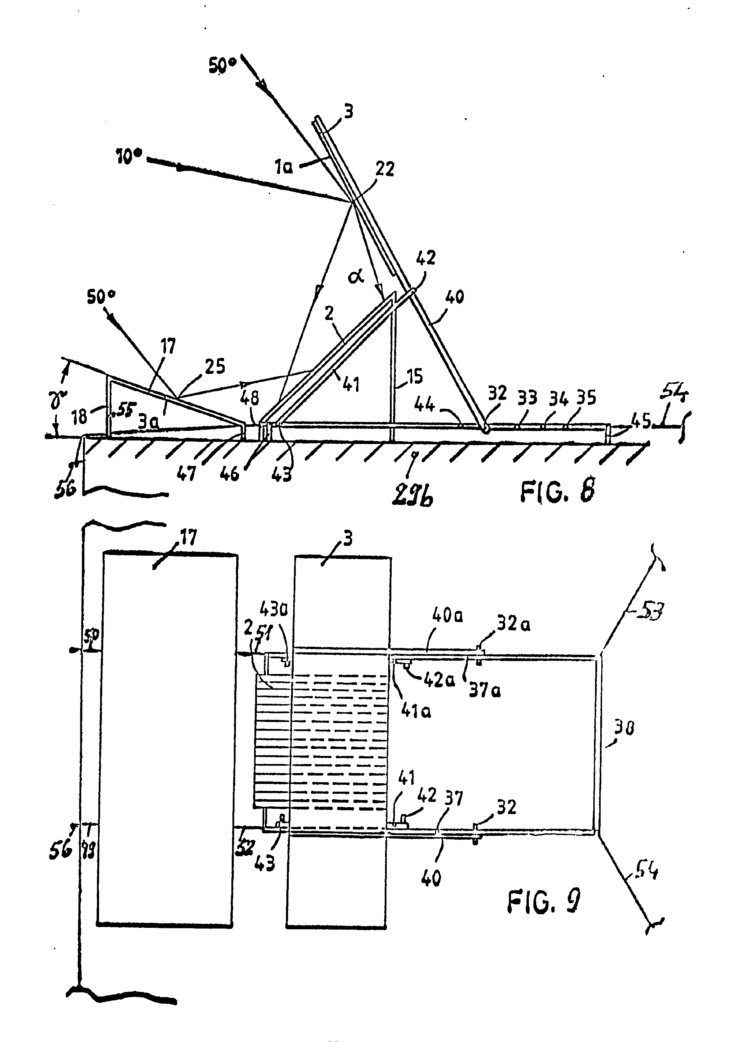

Fig. 5 zeigt eine Ausführungsform, die auf einem Flachdach 39 oder dergleichen horizontalen Fläche angeordnet ist. In dieser Seitenansicht ist nur die eine Bodenstange 37 sichtbar. Wie ein Blick auf die Fig. 6 zeigt, ist diese sowie sind zahlreiche andere Teile doppelt vorgesehen, die genau dahinter liegen und deshalb in dieser Seitenansicht nicht sichtbar sind. In beiden Figuren ist links Süden und rechts Norden. Die Bodenstange 37 zeigt an ihrem nördlichen Ende eine Anzahl von Bohrungen 32, 33, 34, 35, wobei in die südlichste Bohrung 32 ein Bolzen eingesetzt ist, um die obere Schwinge 12 zu befestigen, die sich nach links erstreckt.

Etwas weiter links sieht man in der Bodenstange 37, die also auf dem Boden aufliegt, eine weitere Bohrung 20 mit einem Bolzen, durch den die linke Schwinge 31 unten befestigt ist. Weiter oben sind die beiden Schwingen 12 und 31 durch das Scharnier 30 befestigt. An der Schwinge 31 ist im unteren Bereich links das Tragelement 3 angebracht, auf dem die Spiegelfläche 1 befestigt ist.

Darunter sieht man mit strichpunktierten Linien die Vacuum-RöhrenKollektoren des Kollektorfeldes 2 angeordnet, die hinter der Bodenstange 37 liegen, wie man auch der Fig. 6 entnehmen kann. Weiter links schließt sich durch den Bolzen 19 befestigt, das südliche Tragelement 3a an, auf dem die Spiegelfläche 17 befestigt ist. Weiter links ist an der Südkante des Tragelementes 3 a durch den Bolzen 36 eine Stütze 18 angebracht, die sich nach Anheben des Tragelementes 3 a nach unten klappen läßt.

Die Schwinge 31 ist in einem Winkel α zu der Bodenstange 37 angeordnet, der in diesem Falle 40° beträgt. Dies ist die Wintereinstellung etwa für die Monate November, Dezember und Januar.

Wenn man den Bolzen 32 gelöst hat, kann man den Winkel α ändern. Wenn man den Bolzen nun in das Loch 33 einführt und ihn mit der Schwinge 12 verschraubt, ist die nächstfolgende Stellung mit einem vergrößerten Winkel α erreicht, wie er etwa in den Monaten Februar und März benötigt wird. Bei einer Einstellung in den übrigen Löchern 34 und 35 wird die Sommereinstellung erreicht, wodurch der Winkel α im Sommer je nach Breitengrad, auf dem die Vorrichtung benutzt wird, 90 ° oder sogar über 90 ° betraben kann.

In unseren Breitengraden steht indessen die Wintersonne sehr niedrig, wie der Fachmann weiß, und erreicht in den Wintermonaten keinesfalls mehr als 30°. Diese 30°-Strahlung ist zweifach eingezeichnet. Oben sieht man den Mittenstrahl, der auf den Spiegel 1 Punkte 21 und 22 auftrifft. Darunter wird er im gleichen Winkel, in dem er zum Spiegel einfällt, auf das Kollektorfeld 2 geworfen, weil der Einfallswinkel gleich dem Ausfallswinkel ist. Gleichzeitig trifft aber ein anderer Mittenstrahl ebenfalls in dem Winkel von 30 ° auf die Spiegelfläche 17, der etwa auf gleicher Höhe mit dem Kollektorfeld 2 liegt. Diese Strahlung wird zunächst auf den Spiegel 1 reflektiert und von da auf das Kollektorfeld 2 geworfen. Darüber hinaus trifft natürlich auch die direkte Sonneneinstrahlung, wie üblich auf das Kollektorfeld 2, so daß die Strahlung über die Spiegelfläche 1 und die Spiegelfläche 17 absolut zusätzlich auf die Kollektoren 2 trifft.

Da nun in diesem Falle die Spiegelflächen 1 und 17 noch wesentlich breiter sind als das Kollektorfeld 2, steht zu erwarten, daß bei dieser Einstrahlung mindestens 300 % der Leistung erreicht werden, die andernfalls ohne den Erfindungsgegenstand erzielt würden.

Wenn nun im Frühjahr und im Sommer eine andere Einstellung gewählt wird, muß auch die Stellung des südlichen Spiegels 17 über der dargestellten geändert werden, weil andernfalls bei einem größeren Winkel α die Strahlung nicht mehr auf das Kollektorfeld 2 über den Spiegel 17 geworfen würde. Hierzu wird der Bolzen 19 gelöst und die südliche Kante des Tragelementes 2 a angehoben sowie die Stütze 18 senkrecht nach unten gestellt. Dies kann auch in mehreren Positionen erfolgen, so daß die Spiegelfläche 17 in verschiedene Winkel gelangt.

Fig. 6 zeigt die Draufsicht. Unter anderem wird hier sichtbar, daß die Tragelemente 3, 3a nach Osten und Westen weit über das Kollektorfeld 2 hinausgehen, so daß die Sonneneinstrahlung auch frühmorgens und spätabends auf das Kollektorfeld 2 auf diese Weise ebenfalls reflektiert wird, das hier durch unterbrochene Linien angedeutet ist. Es handelt sich um Vacuum-Röhren-Kollektoren, für die heute die horizontale Anordnung, wie in Fig. 1 gezeigt, bevorzugt ist. Es ist auch schon bekannt, unter den Kollektoren Spiegelrinnen anzuordnen, um die von oben kommende Strahlung in die Röhren und auf die Absorberflächen in den Röhren zu reflektieren. Dies ist unter anderem nötig, um die an den Glasröhren reflektierte Sonnenstrahlung möglichst vollständig zu nutzen. Dabei sind die Absorberflächen innerhalb der Röhren in einem gewissen Winkel zur Horizontalen geneigt angeordnet, wie dies dem Fachmann bekannt ist.

Ferner kann man der Fig. 6 entnehmen, daß zwei Bodenstangen 37, 37a, zwei Schwingen 12, 12 a vorhanden sind. Die beiden Bodenstangen 37, 37a sind durch einen Abstandshalter 38 im Abstand zueinander gehalten. Auf der linken Seite wird der Abstand durch das Stützelement 3 gehalten, das wie schon erwähnt, mit der Schwinge 31 und der in Fig. 5 dahinter liegenden aber auch in Fig. 6 nicht sichtbaren Schwinge 31a verbunden ist. Diese beiden Schwingen liegen nämlich genau unter den Schwingen 12 und 12 a nach der Fig. 6.

Der Erfindungsgegenstand kann auch aus dem verschiedensten Material gefertigt sein. Dargestellt ist indessen eine Holzkonstruktion, wobei alle Stangen und Schwingen sowie die Tragelemente 3, 3a aus Holz gefertigt sind, weil dies ein verhältnismäßig billiges Material ist. Es besteht aber auch die Möglichkeit, dies aus Metall sowie aus kunststoff auszuführen.

Die beiden Bodenstangen 37, 37a sind einstückig nach links, also nach Süden, bis zum Ende der Spiegelfläche 17 durchgehend ausgebildet. Es besteht aber auch die Möglichkeit, daß die Bodenstangen kürzer ausgebildet werden, sie bräuchten eigentlich nur bis zu dem Bolzen 20 zu reichen. Nur der größeren Stabilität wegen ist die erwähnte Durchführung erfolgt.

Die Ausführungsform nach den Fig. 5 und 6 zeigt den Vorteil, daß sie gut zugänglich ist und auf Flachdächern leicht angeordnet werden kann. Hierzu ist auf einem Flachdach nicht erforderlich, das Flachdach irgendwie zu verändern. Falls eine Befestigung zur Aufnahme der Windlast erforderlich erscheint, können drei Seile von dem Spiegelhalter zu den Enden des Flachdaches geführt werden, die dort am Flachdach heruntergeführt und am Mauerwerk befestigt oder verspannt werden. Dadurch ist sichergestellt, daß das Flachdach nicht beschädigt werden kann und auch nicht angegriffen werden muß.

Es ist auch die Kombination mit einer Thermo-Syphon-Anlage möglich, wobei der Speicherbehälter in der üblichen Weise nördlich des Kollektorfeldes 2 zwischen den beiden Bodenstangen 37, 37a genügend Platz findet.

Ferner ist für den Fachmann verständlich, daß niedrigere Sonnenstrahlen als 30 °, wie sie in der Fig. 5 eingezeichnet sind, auf die gleiche Weise zum Kollektorfeld 2 reflektiert werden. Deshalb ist die Erfindung gemäß den Fig. 5 und 6 besonders gut für den Winterbetrieb geeignet. Je niedriger die Sonnenstrahlen sind, desto größer ist nämlich gemäß Fig. 5 die Nutzung der eintreffenden Strahlung durch den Spiegel 1. Deshalb ist der Neuerungsgegenstand auch ohne das Tragelement 3a und den Spiegel 17 besonders für die Winternutzung geeignet. Damit können natürlich auch die Stützen 18, 18a entfallen.

Der Fig. 5 kann ferner entnommen werden, daß diese Ausführungsform den Vorteil zeigt, daß kein Schneefall oder Hagelschlag auf die Spiegelfläche 1 und auch nicht auf das Kollektorfeld 2 gelangen kann. Jedenfalls ist bei den in etwa dargestellten Dimensionen auch das Kollektorfeld 2 hierdurch geschützt.

Fig. 7 zeigt einen lotrechten Mast 10, der durch einen schrägen nördlichen Mast 11 mit einem oder mehreren horizontalen nicht bezeichneten Querbalken mit dem lotrechten Mast 10 verbunden isst. An diesem lotrechten Mast sind von unten nach oben mehrere horizontale Träger 16, 17a, 18, 19, 20 an der Südseite befestigt. In Fig. 7 ist links Süden und rechts Norden. An diesen horizontalen Trägern 16-20 sind in einem Winkel von 60 ° nach oben links führende Stützen 12, 13, 14, 15 befestigt, ferner dazwischen liegende Solarkollektoren 1, 2, 3, 4, die in diesem Falle in einem Winkel von 45 ° zu der Horizontalen angeordnet sind.

Die Unterkante des untersten Kollektors 1 ist in einem Abstand a vom Boden entfernt. Der Abstand zu und zwischen den übrigen Kollektoren 2-4 ist b so groß gehalten, daß eine wesentliche gegenseitige Beschattung der Kollektoren während des ganzen Jahres nicht möglich ist. Das liegt daran, daß in unseren Breitengraden die maximale Sonneneinstrahlung etwa 60 ° beträgt.

Hinter dem Mast 10 sind identische Masten in gewissen Abständen von zum Beispiel 3 m angeordnet, die durch die erwähnten horizontalen Querträger 16-20 miteinander in Verbindung stehen. Auch die schrägen Stützen 11 können entsprechend vervielfältigt sein. Sie dienen lediglich der Aufnahme der Windlast im Bedarfsfall, d. h., sie können auch entfallen, wenn die lotrechten Masten 10 entsprechend ausgebildet sind, zum Beispiel als bekannte Gittermaste aus Stahl. Dargestellt ist eine Anordnung aus Holzmasten, die durch einige wenige rostfreie Bolzen in entsprechenden Löchern miteinander verbunden sind.

Insoweit gehört die Anlage nach der Fig. 7 im wesentlichen zum Stand der Technik. Allerdings waren die Streben 12-15 gemäß dem Stand der Technik horizontal angeordnet, gemäß der Neuerung liegen sie in einem Winkel von 60 ° zu der Horizontalen.

Es sind nun weiterhin die ebenflächigen Tragelemente mit spiegelnden Flächen, die hier mit "Spiegel" bezeichnet werden sollen, 5, 6, 7, 8 an der Oberkante der Kollektoren 1, 2, 3, 4 dadurch angeordnet, daß sie an den erwähnten Streben 12-15 befestigt sind. Zwischen diesen Streben und der Unterkante der Kollektoren können weitere horizontale nicht bezeichnete aber dargestellte Träger vorgesehen sein. Diese liegen zu den erwähnten horizontalen Trägern 16-20 parallel.

Im unteren Bereich sind nun weitere nach Süden gerichtete Horizontalträger und Stützen hierfür sichtbar, auf denen ein weiterer Spiegel 9 in einem Winkel von 15 ° an der Unterkante des untersten Kollektors 1 anschließend angeordnet und gehalten ist. Alle Spiegel 5-9 erstrecken sich nach Osten und nach Westen über die Kollektoren hinaus, was in dieser Fig. 7 nicht sichtbar ist, jedoch anhand der Fig. 8 noch dargestellt und erläutert werden wird. Dies ist erfindungsgemäß sehr wichtig, weil dadurch die frühmorgens und spätabends auftretende Sonnenstrahlung durch die Spiegel ebenfalls genutzt werden kann.

Die Wirkungsweise im übrigen ist unten und oben dargestellt. Unten ist der 20° und der 45 ° Strahl eingezeichnet. Dieser trifft auf den Spiegel 17 und wird durch diesen auf den Kollektor 1 abgelenkt. Hier wurde der Mittenstrahl ausgewählt. Dem Fachmann ist verständlich, daß die Strahlung insgesamt auftrifft, der Mittenvektor dient lediglich zur Darstellung der Gesamtstrahlung.

Ferner ist verständlich, daß die gesamte Strahlung zwischen 20° und 45 ° ebenfalls auf den unteren Kollektor 1 gelenkt wird.

Die Wirkungsweise der an der Oberkante angebrachten Spiegel 5-8 ist im obersten Bereich der Fig.7 dargestellt. Man sieht die 10° und 50 ° - Strahlung eingezeichnet. Dadurch ist klar, daß die dazwischen liegenden Einstrahlungen während des ganzen Tages auch dann auf die unteren Kollektoren abgelenkt werden, wenn sie frühmorgens oder spätabends stark von Osten oder Westen, also von Südosten oder Südwesten herkommen.

Im Falle der Verwendung von Röhrenkollektoren könnte der Neigungswinkel auch gleich Null gewählt werden. Hierzu müßten lediglich die Streben 12-15 verlängert werden. Dadurch würde sich der Vorteil ergeben, daß die Windlast geringer wäre, weil zwischen den Spiegeln und der Unterkante der Kollektoren ein größerer Raum entstehen würde, der durch die südlichen und nördlichen Winde nicht beansprucht wird.

Im unteren bereich sieht man in der Fig. 7, daß auch in diesem Falle zwischen der Oberkante der Spiegel 5 und der Unterkante des Kollektors 2 ein gewisser Abstand innerhalb des Bereiches b freibleibt.

Die Ausführungsform nach der Fig. 7 wird in der Regel auf dem Boden bei Großanlagen angewendet. Es besteht aber auch die Möglichkeit, diese auf beliebigen Dächern von Gebäuden, auch in der Mitte von Großstädten, anzubringen. Dabei könnte dann der Abstand a entfallen.

Fig. 8 zeigt eine weitere Ausführungsform, die auf einem Flachdach 29 b angeordnet ist. Zunächst sieht man in der Mitte einen Kollektorständer 15 zur Halterung des Kollektorfeldes 2 herkömmlicher Art. Solche bekannten Kollektorständer bestehen meistens aus Stahlrohr und sind mit Füßen 48 zum Abstellen auf dem Boden oder dem Flachdach versehen. Dies muß nicht im einzelnen dargestellt werden, weil es dem Fachmann bekannt ist. Der Neigungswinkel beträgt hier 45 °.

Der Erfindungsgegenstand zeigt nun ein Gestell, das ebenfalls auf Füßen 45, 46 und 55 aufruht. In Wahrheit sind es natürlich noch mehrere Füße, die dahinter liegen.

Das Gestell mit den horizontalen Bodenstangen 37, 37a ist, wie man auch der Fig. 9 entnehmen kann, um den herkömmlichen Kollektorständer 15 herumgebaut. Somit besteht die Möglichkeit, das Gestell zusätzlich bei bereits installiertem Kollektorständer 15 mitKollektoren 2 anzubringen.

In der Fig. 8 sieht man deutlich, daß die Stangen 40, 40a unten mit Bolzen 32, 32a an einem Ende mit den Bodenstangen 37, 37a verschraubt sind, so daß sich der Winkel α von zum Beispiel 60° wie zuvor gegenüber der Horizontalen ergibt. Etwas unterhalb der Höhe des Kollektorständers 15 sind diese Stangen 40, 40a mit Stützstangen 41, 41a durch die Bolzen verschraubt, welche am unteren Ende durch den Bolzen 43, 43a mit den Bodenstangen 37, 37a verschraubt sind. Die Bodenstangen zeigen nun eine größere Anzahl von Löchern 33, 34, 35, 44, um die Verschraubung der Stangen 40, 40a mit den Bodenstangen 37, 37a zu verstellen. Dem Fachmann ist ohne weiteres verständlich, daß dann, wenn der Bolzen 32 gelöst und in ein anderes Loch, z. b. 33, eingeführt wird, der Winkel α gegenüber der Horizontalen geändert ist.

Im oberen Bereich der Stangen 40, 40a, ist ein Tragelement 3 b mit einer spiegelnden Fläche 1a befestigt, vorzugsweise ebenfalls angeschraubt.

Weiter links sieht man ein weiteres Gestell mit den beiden Füßen 18, 47, durchdie das Tragelement 3a mit der Spiegelfläche 17 und einem Winkel γ zum Flachdach 29 angeordnet ist. Zur Verstellung des Winkels γ ist in den hohen Stützen 18 ein Scharnier 55 angeordnet. Dadurch kann man den unteren Teil der Stützen 18 nach oben klappen, wodurch γ dann geändert ist. Natürlich kennt der Fachmann auch noch andere Möglichkeiten, die Höhe der Stützen 18 im Bedarfsfall, nur saisonbedingt, zu verstellen.

Die Wirkungsweise ist wieder durch den 50°-Strahl links dargestellt, der im Mittelpunkt 25 der Spiegelfläche 17 auftrifft und einwandfrei auf die Kollektorfläche 2 gelenkt wird.

Ferner trifft der 50 ° Strahl im Punkt 22 auf die Spiegelfläche 1a und wird von da ebenfalls auf den Kollektor 2 abgelenkt. Das Gleiche gilt für den 10°-Strahl, der ebenfalls im Punkt 22 auftrifft.

Da der Winkel γ hier gleich 15 ° gewählt wurde, wird der 10°-Strahl von der unteren Fläche 17 nicht reflektiert. Um dies zu ermöglichen, ist, wie schon erwähnt, erforderlich, die Stütze 18 zu verkleinern.

Ferner sind noch die Seile 49 links und 54 rechts dargestellt, durch die die Anlage gegen die Windlast mit dem Flachdach 29 verspannt ist. Hierzu sieht man links deutlich, daß das Seil 49 um die Oberkante des Flachdachs 29 herumführt und dort an einem Haken 56 befestigt ist, der in die horizontale Wand des Gebäudes eingedübelt wurde. Dadurch ist nicht erforderlich, das Flachdach 29 anzugreifen. In ähnlicher Weise werden auch die weiteren Seile 53, 54, siehe Fig. 9, mit dem Haus oder dem Untergrund verspannt.

Fig. 9 zeigt links, daß es sich um 2 Seile 49, 50 im Abstand zueinander handelt.

In Fig. 9 ist wieder links Süden und rechts Norden, während oben Westen und unten Osten ist. Man erkennt, daß die Spiegelflächen 17 und 1 a mit dem Tragelement 3b nach Osten und Westen geradlinig weit über das Kollektorfeld 2 hinaus verlängert sind. Dadurch können auch die östlichen und westlichen Strahlungen, wie oben schon erwähnt, auf den Kollektor 2 gelenkt werden.

Weiter rechts sieht man, daß hier zwei Seile 51, 52 zur Verbindung mit dem rechten Teil des Gestells angeordnet sind. Dies ist erforderlich, um die Windkräfte auf die übrigen Seile zu übertragen.

Bei dem Kollektorfeld 2 kann es sich wieder um Röhrenkollektoren handeln, was durch die von Süden nach Norden laufenden Striche angedeutet ist.

Weiter rechts sieht man die Rückseite des Tragelementes 3 b, die in diesem Falle als eine Art Dachfläche dienen kann und auch soll. Man erkennt deutlich, daß das Kollektorfeld 2 hierdurch zum größten Teil überdacht ist. Dadurch wird der Kollektor vor Schnee und Hagel geschützt, so daß er auch im Winter wirksam sein kann. Im Winter wird indessen das Gestell so verstellt, daß der Neigungswinkel α zum Boden stark geändert ist, zum Beispiel durch Benutzung des letzten Loches 35 in den Bodenstange 37, 37a. Vorzugsweise wird dies so dimensioniert, daß der Winkel α dann nur 40 ° beträgt. Auf diese Weise ist dann im Winter der Kollektor 2 vollständig überdacht, so daß er selbst nach starkem Schneefall voll wirksam sein kann, ohne daß erforderlich ist, den Schnee zu entfernen.

Weiter rechts sieht man in Fig. 9 am Ende der Bodenstangen 37, 37a, eine abstandshaltende Stange 38. Der Abstand zwischen den Stangen 40, 40a, wird natürlich durch das Tragelement 3 b gehalten. Ferner kann auch am linken Ende eine abstandshaltende Stange zwischen den beiden Bodenstangen angeordnet sein.

Die Schrauben zur Befestigung des Tragelementes 3b an den Stangen 40, 40a sind nicht dargestellt, die Befestigung kann auch auf andere Weise erfolgen, zum Beispiel durch Nageln.

Die Ausführungsform nach der Fig. 7 kann auch an der Südfassade eines Gebäudes angebracht werden. Hierzu können die Masten 11 und möglicherweise auch die Masten 10 entfallen, ebenso die horizontalen Träger 16-20. Die Kollektoren 1-4 und die Streben 12-15 werden dann direkt und in bekannter Weise an der Südfassade des Gebäudes befestigt. Dies ist dem Fachmann verständlich, ohne daß es zeichnerisch dargestellt ist.

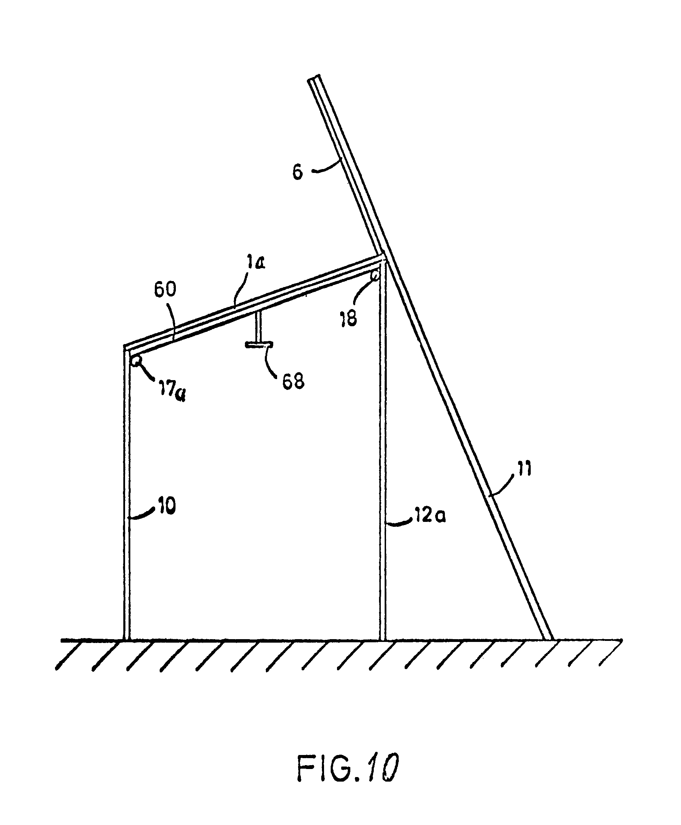

Fig. 10 zeigt eine darüber hinausgehende Ausführungsform. Das Gestell ist hier ähnlich wie zuvor durch die senkrechten Stützen 10, 12a und schräg zum Boden verlaufenden Stützen 11 gebildet. Oben sind die Stützen durch Streben 6 miteinander verbunden, welche durch horizontale Querträger 17a, 18, wie bisher, horizontal in Verbindung stehen. Darüber ist in diesem Falle ein Kollektor 1 c angeordnet, der in bekannter Weise gleichzeitig als Wärme-Speicher ausgebildet ist.

Die schrägen Stützen 11 sind oben über die Verbindung der Stützen 12a mit dem Querträger 18 hinaus geradlinig verlängert, um die Spiegel 6 aufzunehmen. Diese sind somit an der nördlichen Kante des Kollektorfeldes 1 c in einem Winkel von zum Beispiel 70 ° zum Boden angeordnet. Dadurch ist die Wirkungsweise wie zuvor beschrieben, und muß deshalb nicht noche inmal dargestellt werden. Ebenfalls sind die Spiegel 6 zusammen mit ihren Aufnanmeelementen, die hier nicht gesondert dargestellt sind, nach Osten und Westen über das Kollektorfeld 1 c hinaus verlängert, wie zuvor beschrieben.

In diesem Falle steht der Speicherkollektor 1 c mit der Dusche 68 in Verbindung. Es handelt sich somit um eine im Freien aufstellbare Dusche, die zum Beispiel in Freibädern, aber auch an Badesträenden Verwendung finden kann. Dem Fachmann sind im Prinzip derartige Freibad -Duschen bekannt, so daß diesnicht im einzelnen dargestellt werden muß. Durch die Erfindung wird indessen das Duschwasser solar erwärmt, weil es sich hier in der Regel um Leitungswasser handelt, das zum Duschen zu Kalt ist.

Die Stüzen und die Querträger können in diesem Falle aus verhältnismäßig dünnen rostgeschützten Stahlrohren bestehen.

Freibäder sind besonders bei intensivem Sonnenschein gut besucht, so daß die Wirkung der Spiegel 16 und 17, die in der Zeichnung nicht dargestellt sind, in diesem Falle besonders erwünscht ist. Das Gleiche gilt von Badesträenden.

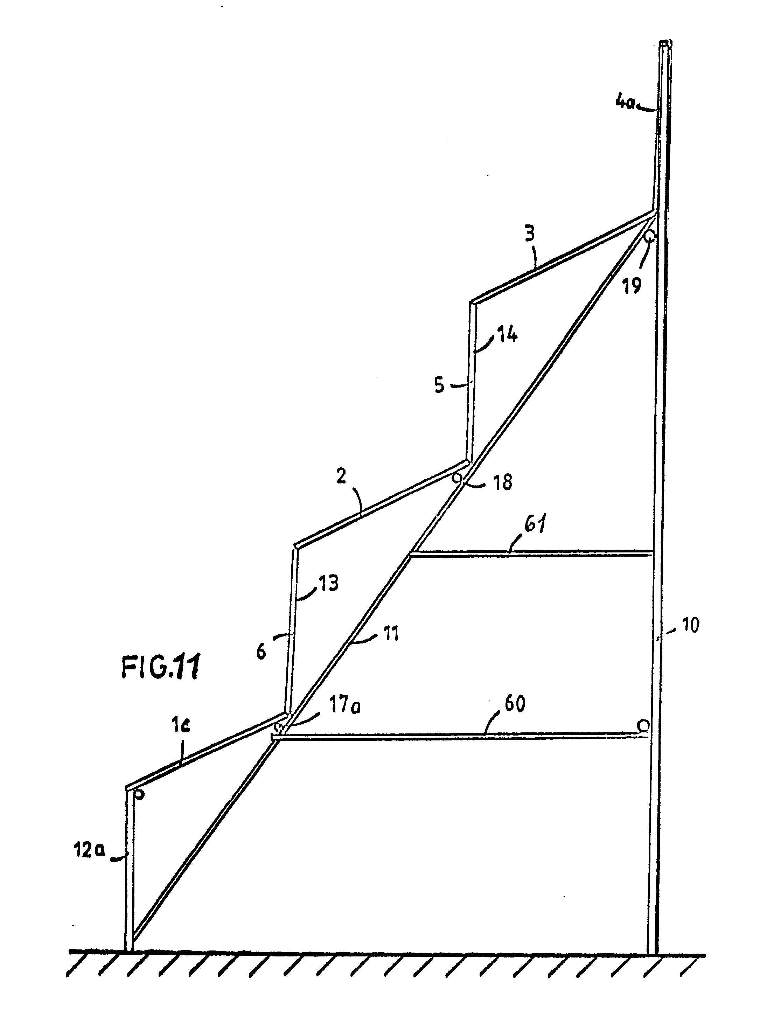

Schließlich zeigt die Fig. 11 eine Ausführungsform, bei der die Stützen 11 schräg nach Süden gerichtet sind, auf denen die Spiegel 5, 6 zusammen mit ihren nicht gesondert dargestellten Tragelementen in etwa senkrecht angeordnet sind, an die sich die Kollektoren oder Solarmodule 1c, 2 und 3 in der dargestellten Weise anschließen. Der oberste Spiegel 4a ist in diesem Falle an der obersten Verlängerung der senkrechten Stütze 10 angeordnet. Die beiden Stützen 10 und 11 sind durch Querstüzen 60, 61 miteinander verbunden. Unten schließen sich wieder nicht dargestellte Spiegel 17 wie in Fig. 7 an.

Diese Konstruktion wird insbesondere in der Nähe des Äquators verwendet, wo die Spiegel 4a, 5 und 6 sum Beilspiel in einem Windel von 90° angeordnet sind, während die Kollektoren oder Solarmodule 1c, 2 und 3 in einem verhältnismäßig kleinen Winkel von zum Beispiel 25° zur Horizontalen angeordnet sind, wenn die Anlage zum Beispiel auf dem 25. Breitengrad errichtet wird.

Auch hier sind die Spiegel wieder nach Osten und Westen zusammen mit ihren Tragel ementen über die Kollektoren hinaus verlängert wie zuvor.

## Ansprüche

1. Solaranlage mit einem Kollektorfeld, das eine Mehrzahl von in nebeneinarider oder übereinander liegenden Reihen von Absorbern und/ oder Solarzellen mit dazwischen liegendem Abstandsraum (6-8) aufweist, an deren Rändern teilweise ein oder mehrere ebene Spiegelflächen in einem Winkel zu den Absorbern und/oder Solarzellen angeordnet sind, wobei die auf die Spiegelflächen auftreffende Sonnenstrahlung zumindest teilweise auf die Absorber und/oder Solarzellen fällt, dadurch gekennzeichnet, daß die Spiegelflächen (1, 17) und die Absorber (2) und/oder Solarzellen starr auf dem Dach (21) eines Gebäudes oder auf Tragelementen (3, 3a) angeordnet sind, daß die Spiegelflächen bei der Benutzung in einer zur Absorber- und/ oder Solarzellenebene geneigt verlaufenden Ebene befestigt sind, wobei mindestens eine etwa horizontal liegende Spiegelfläche (17) vorhanden ist, daß die Spiegelflächen sich hinsichtlich der Absorber und/oder Solarzellen bei der Benutzung seitlich über die Absorberflächen und/ oder Solarzellenflächen (24) hinaus ausdehnen, daß die Spiegel flächen durch Folien oder spiegelnde Metallflächen gebildet sind, die an den starren Tragelementen zur Halterung der Spiegel befestigt sind und daß die Spiegel (1, 17) in dem Abstandsraum (6-8) zwischen den Reihen der Kollektoren oder Solarmodule angeordnet sind.

2. Solaranlage nach Anspruch 1, dadurch gekennzeichnet, daß bei der Anordnung auf einem geneigten Dach (21) mehrere parallel zueinander liegende Stützen (12) horizontal zwischen dem Dach und der Randkante des die Spiegel tratenden Tragelementes (3) angeordnet sind.

3. Solaranlage nach Anspruch 1, dadurch gekennzeichnet, daß die das Tragelement (3) für die Spiegelfläche (1) nördlich des Kollektorfeldes (2) tragende Stützen (31, 33a) als Schwingen ausgebildet sind, die an ihrem einen Ende (20) an Bodenstangen (37, 37a) beweglich gelagert und am anderen Ende durch ein Scharnier (30, 30a) mit weiteren Schwingen verbunden sind, welche am anderen Ende an Bodenstangen verstellbar sind.

4. Solaranlage nach Anspruch 3, dadurch gekennzeichnet, daß die Bodenstangen (37, 37a) mehrere im Abstand zueinander angeordnete Durchgangslöcher (32-35) zur verstellbaren Befestigung der Schwingen (12, 12a) aufweisen.

5. Solaranlage nach Anspruch 3, dadurch gekennzeichnet, daß an einer Verlängerung der Bodenstange (37, 37a) nach Süden und südlich des Kollektorfeldes (2) ein weiteres Tragelement (3a) mit einer weiteren Spiegelfläche (17) beweglich angeordnet ist, das an seinem Südende durch bewegliche Stützen (18, 18a) abstützbar ist.

6. Solaranlage nach Anspruch 1, dadurch gekennzeichnet, daß parallel zueinander liegende Bodenstangen (37, 37a) vorgesehen sind, an denen zwei die Tragelemente haltende Stangen (40, 40a) in einem Winkel (α.) zur Horizontalen parallel angeordnet und durch zwei diese stützenden Stangen (41, 41a) gehalten sind, die am anderen Ende ebenfalls mit Bodenstangen in einem Winkel befestigt sind.

7. Solaranlage nach Anspruch 6, dadurch gekennzeichnet, daß die Bodenstange (37, 37a) in Abständen zueinander liegende Löcher (32, 33, 34, 35, 44) zur verstellbaren Befestigung der Stangen (40, 40a,) mit den Bodenstangen aufweisen, und daß die Stangen mit den Stützen (41, 41a) sowie den Bodenstangen lösbar verschraubt sind.

8. Solaranlage nach Anspruch 6, dadurch gekennzeichnet, daß mindestens ein Abstandshalter (38) zwischen den beiden Bodenstangen (37, 37a) angeordnet sind.

9. Solaranlage nach Anspruch 6, dadurch gekennzeichnet, daß das Gestell mit mehreren Seilen (49, 50, 51, 52, 53, 54) versehen ist.

10. Solaranlage nach Anspruch 1, dadurch gekennzeichnet, daß Spiegel (4a, 6) an geradlinigen Verlängerungen von Stützen (10, 11) des Gestells angeordnet sind, welche Stützen senkrecht oder schräg zum Boden angeordnet sind.

11. Solaranlage nach Anspruch 10, dadurch gekennzeichnet, daß zwischen senkrechten Stützen (10, 12a) des Gestells (16) oben eine Dusche (68) angeordnet ist, die mit dem Kollektor (1a) in Verbindung steht.

**Claims**

1. Solar installation with a collector panel, which has a plurality of juxtaposed or superimposed rows of absorbers and/or solar cells with interposed spacing gaps (6 to 8), on whose edges are partly arranged one or more planar mirror surfaces at an angle to the absorbers and/or solar cells, the solar radiation striking the mirror surfaces at least partly striking the absorber and/or solar cells, characterized in that the mirror surfaces (1,17) and the absorbers (2) and/or solar cells are rigidly arranged on the roof (21) of a building or on support members (3, 3a), that the mirror surfaces during use are fixed in a plane inclined with respect to the absorber and/or solar cell plane, there being at least one approximately horizontal mirror surface (17), that the mirror surfaces being extended laterally over and beyond the absorber surfaces and/or solar cell surfaces (24) during use, that the mirror surfaces are formed by films or reflecting metal surfaces fixed to the rigid support members for securing the mirrors and that the mirrors (1, 17) are arranged in the spacing gaps (6 to 8) between the rows of collectors or solar modules.

2. Solar installation according to claim 1, characterized in that in the case of an arrangenent on a sloping roof (21) there are several parallel supports (12) arranged horizontally between the roof and the edge of the support member (3) carrying the mirrors.

3. Solar installation according to claim 1, characterized in that the supports (31, 33a) carrying the support member (3) for the mirror surface (1) to the north of the collector panel (2) are constructed as rocker arms, whose one end (20) is movably mounted on ground bars (37, 37a) and whose other end is connected by a hinge (30, 30a) to further rocker arm means, which are adjustable at the other end on ground bars.

4. Solar installation according to claim 3, characterized in that the ground bars (37, 37a) have several spaced through-holes (32 to 35) for the adjustable fixing of the rocker arms (12, 12a).

5. Solar installation according to claim 3, characterized in that on an extension of the ground bar (37, 37a) to the south and to the south of the collector panel (2) is movably arranged a further support member (3a) with a further mirror surface (17), which can be supported on its south end by movable supports (18, 18a).

6. Solar installation according to claim 1, characterized in that there are parallel ground bars (37, 37a) on which are arranged in parallel two bars (40, 40a) securing the support members at an angle (α) to the horizontal and are secured by two bars (41, 41a) supporting the same and which are also fixed at the other end to the ground bars under an angle.

7. Solar installation according to claim 6, characterized in that the ground bars (37, 37a) have spaced holes (32, 33, 34, 35, 44) for the adjustable fixing of the bars (40, 40a) to the grounds bars and that the bars are detachably screwed to the supports (41, 41a) and the ground bars.

8. Solar installation according to claim 6, characterized in that at least one spacer (38) is located between the two ground bars (37, 37a).

9. Solar installation according to claim 6, characterized in that the frame is provided with several cables (49, 50, 51, 52, 53, 54).

10. Solar installation according to claim 1, characterized in that mirrors (4a, 6) are arranged on linear extensions of frame supports (10, 11), which are at right angles or inclined relative to the ground.

11. Solar installation according to claim 10, characterized ina that a shower (68) is located at the top between vertical supports (10, 12a) of the frame (16) and is connected to the collector (1a).

**Revendications**

1. Installation solaire comportant un champ de collecteurs formé de plusieurs rangées juxtaposées ou superposées d'éléments absorbeurs et/ou de cellules solaires avec entre elles des intervalles (6-8), dont les bords sont munis partiellement d'une ou plusieurs surfaces réfléchissantes, planes, faisant un angle par rapport aux absorbeurs et/ou aux cellules solaires, le rayonnement solaire incident aux surfaces réfléchissantes tombant au moins partiellement sur l'absorbeur et/ou sur les cellules solaires, installation caractérisée en ce que les surfaces réfléchissantes (1, 17) et les absorbeurs (2) et/ou les cellules solaires sont installés de manière fixe sur le toit (21) d'un immeuble ou sur des éléments de support (3, 3a), et pour la mise en oeuvre, les surfaces réfléchissantes sont fixées sur un plan incliné par rapport au plan des absorbeurs et/ou cellules solaires, au moins une surface réfléchissante (17) étant disposée de manière sensiblement horizontale, les surfaces réfléchissantes, s'étendant pour l'utilisation, latéralement au-delà des surfaces absorbantes et/ou des surfaces (24) des cellules solaires latéralement par rapport aux absorbeurs et/ou aux cellules solaires, les surfaces réfléchissantes étant constituées de feuilles ou de surfaces métalliques réfléchissantes qui sont fixées à des éléments de support rigides pour le maintien des éléments réfléchissants (miroirs) et en ce que les miroirs (1, 17) sont prévus dans l'intervalle (6-8) entre les rangées de collecteurs ou les modules solaires.

2. Installation solaire selon la revendication 1, caractérisée en ce que lors de l'installation sur un toit incliné (21), plusieurs appuis (12) parallèles sont disposés horizontalement entre le toit et l'arête de l'élément de support (3) portant les miroirs.

3. Installation solaire selon la revendication 1, caractérisée en ce que les appuis (31, 33a) qui portent l'élément d'appui (1) pour la surface réfléchissante (1) au nord du champ de collecteurs (2) sont réalisés sous forme de bras dont une extrémité (20) est articulée sur les tiges de sol (37, 37a) et dont l'autre extrémité est reliée par une charnière (30, 30a) à d'autres bras qui sont réglables à l'autre extrémité des tiges de sol.

4. Installation solaire selon la revendication 3, caractérisée en ce que les tiges de sol (37, 37a) comportent plusieurs orifices traversants (32-35) distants les uns des autres pour la fixation réglable des bras (12, 12a).

5. Installation solaire selon la revendication 3, caractérisée par un prolongement des tiges de sol (37, 37a) vers le sud et un autre élément de support (3a) muni d'une autre surface réfléchissante (17) est monté mobile au sud du champ de collecteurs (2), cet élément pouvant s'appuyer à son extrémité sud sur des appuis mobiles (18, 18a).

6. Installation solaire selon la revendication 1, caractérisée par des tiges de sol (37, 37a) parallèles sur lesquelles sont montés deux tiges (40, 40a) portant les éléments de support avec un angle (α) par rapport à la direction horizontale et ces tiges sont maintenues par deux tiges d'appui (41, 41a) qui sont fixées suivant un angle également sur les tiges de sol, à l'autre extrémité.

7. Installation solaire selon la revendication 6, caractérisée en ce que les tiges de sol (37, 37a) comportent des trous (32, 33, 34, 35, 44) disposés successivement à des intervalles pour la fixation réglable des tiges (40, 40a) aux tiges de sol et les tiges sont vissées de manière amovible sur les appuis (41, 41a) ainsi que sur les tiges de sol.

8. Installation solaire selon la revendication 6, caractérisée par au moins un organe d'écartement (38) prévu entre les deux tiges de sol (37, 37a). 9. Installation solaire selon la revendication 6, caractérisée en ce que le bâti comporte plusieurs câbles (49, 50, 51, 52, 53, 54).

10. Installation solaire selon la revendication 1, caractérisée en ce que les miroirs ou surfaces réfléchissantes (4a, 6) sont prévus sur des prolongements rectilignes des appuis (10, 11) du bâti, ces appuis étant disposés perpendiculairement au sol ou de manière inclinée.

11. Installation solaire selon la revendication 10, caractérisée en ce qu'elle comporte une douche (68) prévue en partie haute entre les appuis verticaux (10, 12a) du bâti (6), cette douche étant reliée au collecteur (1c).

FIG. 1

FIG. 2

FIG. 3

FIG. 4

FIG. 5

FIG. 6

Fig. 7

FIG. 8

FIG. 9

FIG.10

FIG.11